# EUROPEAN PATENT SPECIFICATION

(11) **EP 3 647 980 B1**
(45) Date of publication and mention of the grant of the patent: **19.01.2022**
(21) Application number: 18306420.3
(22) Date of filing: 30.10.2018
(51) Int. Cl.: G06F 21/55, H04L 29/06

(54) **RESPONSE TO AN INTRUSION AGAINST A SERVICE OF AN OPERATING SYSTEM**
REAKTION AUF EINEN EINGRIFF GEGEN EINEN DIENST EINES BETRIEBSSYSTEMS
RÉPONSE À UNE INTRUSION DANS UN SERVICE D'UN SYSTÈME D'EXPLOITATION

(43) Date of publication of application: 06.05.2020
(73) Proprietor: Hewlett-Packard Development Company, L.P., Spring TX 77389 (US)
(72) Inventor: CHEVALIER, Ronny, 92100 Boulogne-Billancourt (FR); PLAQUIN, David, Bristol, South Gloucestershire BS34 8QZ (GB); DALTON, Christopher Ian, Bristol, South Gloucestershire BS34 8QZ (GB); HIET, Guillaume, 35830 Betton (FR)
(74) Representative: Bryers LLP

(56) References cited:
- US-A1- 2015 365 438
- US-A1- 2018 124 100
- US-B1- 7 818 797
- Wei T. Yue ET AL: "Intrusion Prevention in Information Systems: Reactive and Proactive Responses", Journal of Management Information Systems, 1 July 2007 (2007-07-01), pages 329-353, XP055577098, Armonk DOI: 10.2753/MIS0742-1222240110 Retrieved from the Internet: URL:https://www.researchgate.net/profile/C urtis_Carver/publication/260158893_An_Intr usion_Response_Taxonomy_and_its_Role_in_Au tomatic_Intrusion_Response/links/0046352fc e3cbf3c29000000/An-Intrusion-Response-Taxo nomy-and-its-Role-in-Automatic-Intrusion-R esponse.pdf

## Description

### BACKGROUND

The defense or resiliency of a computer platform may include the following phases: protect, detect, respond and recover. The protection phase aims to stop attackers from violating security properties such as data confidentiality or integrity. The detection phase aims to identify abnormal or illegal behavior events, i.e. intrusions, that occur due to malicious activities on the platform, for example with the help of an Intrusion Detection System, IDS. The response phase aims to help compromised computer platforms withstand intrusions by mitigating damage done to the platform and containing the attack. The recovery phase aims to recover any damage done by the attacker and to restore the platform to a normal state of operation.

US 2015/0365438 A1 relates to implementing a response to a security incident in a computing network. The document discloses a computer in the computing network identifying and characterizing the security incident, and selecting a response depending on the characteristics of the security incident. The selected response is then communicated over the network to the affected networked computer(s) for implementation by the affected computers at the level of the computer.

US 7,828,797 B1 relates to responding to an intrusion to a computer system. The document discloses computing, for a detected intrusion, a response cost, i.e. a computational cost to the computer system for responding to the intrusion, and a damage cost, i.e. a cost of damage to the computer system caused by the intrusion. In the disclosed method, a computational response to the intrusion is implemented in response to an assessment that the damage cost is greater than or equal to the response cost. The method is thus aimed at avoiding implementing a response that is more costly than the target intrusion.

### BRIEF DESCRIPTION OF THE DRAWINGS

Examples are further described hereinafter with reference to the accompanying drawings, in which:
Fig. 1 is a schematic block diagram of an example data processing apparatus including processing circuitry and a memory coupled to the processing circuitry, the memory storing a candidate service level response or a plurality of candidate service level responses to an intrusion;
Fig. 2 is a schematic block diagram of an example data processing apparatus similar to that of Fig. 1 in which the processing circuitry is in communication with a memory storing computer program instructions executable by the processing circuitry;
Fig. 3 is a schematic block diagram of an example data processing apparatus similar to that of Fig. 2, but where the processing circuitry is further in communication with a memory storing a malicious behavior cost model;
Fig. 4 illustrates an example risk matrix for determining a service specific risk indicator indicative of a risk level of a malicious behavior in relation to a service based on a malicious behavior cost and a confidence indicator;
Fig. 5 is a schematic block diagram of an example data processing apparatus similar to that of Fig. 3, but where the processing circuitry is further in communication with a model for mapping an intrusion alert to a malicious behavior or malicious behaviors and a service specific response or responses to each of those behaviors;
Fig. 6 illustrates an example method of determining how to respond to an intrusion alert;
Fig. 7 illustrates an example method of determining how to respond to an intrusion alert which is similar to that of Fig. 6 but where the alert is mapped to a candidate service level response or a plurality of candidate service level responses to the intrusion;
Fig. 8 illustrates an example method of selecting a candidate service level response or candidate service level responses related to an alert;
Fig. 9 illustrates an example method for determining an output from a selected plurality of candidate service level responses; and
Fig. 10 illustrates an example method of determining how to respond to an intrusion alert relating to a plurality of malicious behaviors.

### DETAILED DESCRIPTION

As will be explained in more detail below, adverse effects of an intrusion to an operating system, such as an operating system running on a computer platform, can be mitigated more cost effectively by selecting and applying an operating system service level response to the intrusion. The ability to select per service responses allows the overall response to the intrusion to be more precise and targeted at the operating system service or services affected by the intrusion, which limits the impact of the overall response on performance of the computer platform.

Operating system services may be responsible for management of resources of the computer platform, such as any of: a processor; memory; files stored on the memory; inputs; outputs. For example, operating system services may relate to any of: program execution; input operations; output operations; file system manipulation; communication; error detection; resource allocation; accounting of resources.

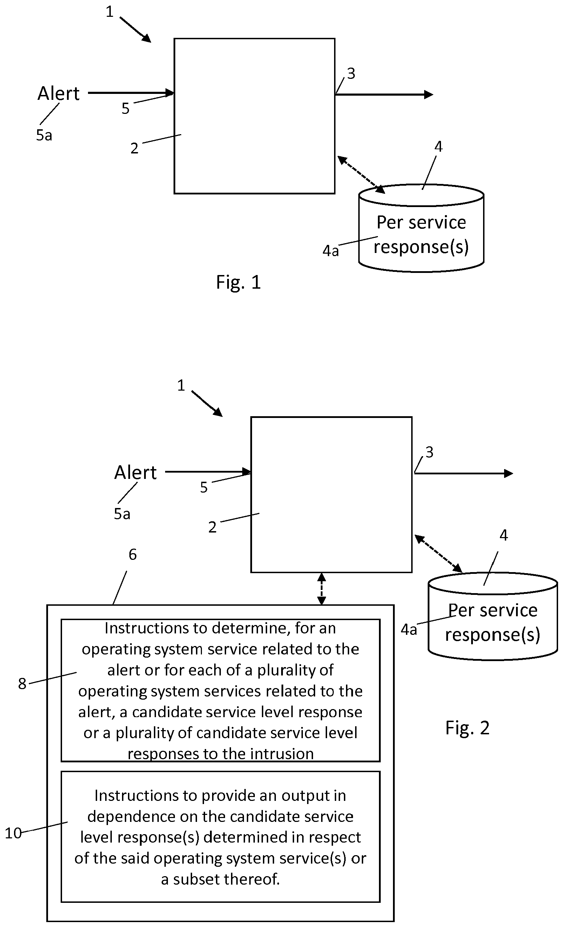

An example data processing apparatus 1 for selecting an operating system service level response to an intrusion to an operating system having a plurality of operating system services is illustrated by the schematic block diagram of Fig. 1. The data processing apparatus 1 comprises processing circuitry 2 coupled to an output 3 and a memory 4. The data processing apparatus 1 may further comprise an input 5 coupled to the processing circuitry 2. The input 5 may be arranged to receive an alert 5a indicative of an intrusion to an operating system having a plurality of operating system services running on a computer platform. The input 5 may be arranged to receive the alert 5a, for example, from an Intrusion Detection System, IDS, such as a real-time antivirus program or log-based monitoring of services, in data communication with the data processing apparatus 1. It may be that the IDS is to detect the intrusion by way of detecting suspicious or malicious traffic on a network to which the computer platform is connected, such as suspicious or malicious traffic to or from the computer platform. Additionally or alternatively it may be that the IDS is to detect suspicious or malicious behavior on the computer platform itself. The IDS may issue the alert 5a in response to detecting suspicious or malicious behavior. It may be that the computer platform running the operating system comprises the data processing apparatus 1, or it may be that the computer platform running the operating system is separate from the data processing apparatus 1. It may be that the data processing apparatus 1 or the computer platform runs the IDS, or the IDS may run on data processing apparatus separate from the data processing apparatus 1 and the computer platform.

The memory 4 may store a candidate service level response to the intrusion or a plurality of candidate service level responses 4a to the intrusion. For example, it may be that the memory 4 stores a candidate service level response 4a or a plurality of candidate service level responses 4a for mitigating the intrusion indicated by the alert 5a. The memory 4 may also store a NULL response, a NULL response being indicative that no response is to be made to the alert, for example in relation to a specific operating system service. It may be that the candidate service level response or the plurality of candidate service level responses is a selected sub-set of a larger set of possible candidate service level responses. For example it may be that the candidate service level response or the candidate service level responses of the plurality are candidate service level responses for mitigating a particular malicious behavior associated with the alert 5a. It may be that the larger set of possible candidate service level responses comprises candidate service level responses in respect of operating system services associated with other malicious behaviors associated with the alert 5a or with other possible alerts.

It may be that the candidate service level response or responses for mitigating the intrusion indicated by the alert 5a are identified by a model which maps the alert 5a to the candidate service level response or the plurality of candidate service level responses. This is explained in more detail below. Alternatively it may be that such mapping is provided as part of or together with the alert 5a by the IDS. It may be that the candidate service level response or the candidate service level responses of the plurality are each associated with a respective operating system service related to the alert 5a, such as a respective operating system service known to be affected by the intrusion or by a malicious behavior associated with the alert 5a.

It may be that the memory 4 stores an association between the candidate service level response or each of the candidate service level responses of the plurality and a respective operating system service related to the alert 5a in respect of which the candidate service level response can be applied, such as a respective operating system service affected by a malicious behavior associated with the alert 5a in respect of which the candidate service level response can be applied. For example, it may be known that a malicious behavior associated with the alert 5a directly affects a particular operating system service, and that failure or disruption of that service affects a subsidiary service or a plurality of subsidiary services of the operating system. It may be that the memory 4 stores a plurality of candidate service level responses and an association between each of the candidate service level responses of the plurality and a respective operating system service directly affected by the malicious behavior or a respective operating system service affected by the failure or disruption of the directly affected service.

The processing circuitry 2 may be to receive the alert 5a from the input 5. The processing circuitry 2 may be to select from the memory 4 in response to the alert 5a, for an operating system service or for each of a selected plurality of operating system services of the plurality of operating system services, the operating system service or selected plurality of operating system services being related to the alert, a candidate service level response to the intrusion or a plurality of candidate service level responses to the intrusion associated with that service. It may be that the operating system service or services related to the alert 5a comprise, or the operating system service or services related to the alert 5a may be, an operating system service or services which are affected by a malicious behavior associated with the alert 5a. It may be that the operating system service or services related to the alert 5a are identified by the alert 5a itself, or the operating system service or services related to the alert 5a may be identified by the processing circuitry 2 with reference to a mapping between the alert 5a and an operating system service or services related to the alert 5a by a model stored in a memory in data communication with the processing circuitry 2. This is explained in more detail below. It may be that the processing circuitry 2 is to automatically select the candidate service level response or responses to the intrusion in response to the alert 5a.

By selecting a candidate service level response or candidate service level responses to the intrusion rather than a more coarse-grained machine or network level response, a more granular, targeted response can be made to the intrusion with a lower overall cost to the operating system than such a coarse-grained network or machine level response. This allows the operating system to function better when the response or responses are being applied to mitigate a malicious behavior or intrusion. By selecting the candidate service level response or the candidate service level responses to the intrusion specifically for an operating system service or operating system services related to the alert, a cost-effective response to the intrusion can be determined. By selecting a candidate service level response or candidate service level responses associated with the operating system service or operating system services affected by a malicious behavior associated with the alert 5a, the selected candidate service level response or candidate service level responses can be specifically targeted at that malicious behavior. By selecting the candidate service level response or candidate service level responses to the intrusion from a plurality of candidate service level responses to the intrusion, it may be that the selection can be made in accordance with parameters set by an administrator. This provides flexibility in how to respond to the intrusion. This can also help to select an appropriate candidate service level response or responses particularly if, for example, any parameters relating to the selection of the candidate service level response or candidate service level responses are variable. This is discussed in more detail below.

It may be that the candidate service level response or each of the plurality of candidate service level responses is to selectively disable, block or limit the service with which it is associated. A non-exhaustive list of possible candidate service level responses is as any of: applying a system call filter to block a specific system call on the computer platform; making a path inaccessible on the file system of the computer platform; applying a network socket filter to block a specific internet protocol, IP, address, transmission control protocol/user datagram protocol, TCP/UDP, port or protocol at the computer platform; restricting a path of the computer platform to a "read" path on the file system of the computer platform; blocking access to a device of the computer platform; applying limits or quotas to system resources, e.g. central processing unit, CPU, or memory, of the computer platform; removing operating system specific capabilities or privileges in respect of the computer platform.

It may be that the selected candidate service level response, or each of the selected candidate service level responses, is to at least predominantly affect the service with which it is associated in the memory 4 over the other services of the operating system running on the computer platform. It may be that the candidate service level response or each of the candidate service level responses is specifically targeted at the operating system service with which it is associated. For example, it may be that the candidate service level response or each of the candidate service level responses is to mitigate the intrusion in respect of the service with which it is associated. It may be that the cost of applying the candidate service level response, or the respective cost of applying each of the candidate service level responses, is higher in respect of the service with which it is associated than in respect of the other services of the operating system.

By the candidate service level response or each of the selected candidate service level responses at least predominantly affecting the service with which it is associated in the memory 4 over the other services of the operating system, responses with a high degree of selectivity can be made to the intrusion, yet further reducing the overall cost the computer platform of the responses applied to mitigate a malicious behavior or intrusion.

The processing circuitry 2 may be to provide a signal to the output 3 depending on the candidate service level response, or on the candidate service level responses, selected in respect of the said operating system service or services related to the alert 5a or on a subset of the selected candidate service level responses. For example, the processing circuitry 2 may provide a signal to the output 3 depending on the selected candidate service level response or on all of the selected candidate service level responses. In another example, the processing circuitry 2 may be to select a subset of service level responses from the candidate service level responses selected in respect of the operating system service or the said selected plurality of operating system services related to the alert 5a and provide a signal to the output 3 depending on the selected subset of service level responses. The signal provided to the output 3 may be an indication to the computer platform to apply the selected service level response, the selected service level responses or the selected subset of service level responses as the case may be, or the signal provided to the output 3 may be a signal which causes the computer platform to apply the selected service level response, the selected service level responses or the selected subset of service level responses.

It will be understood that a subset of selected candidate service level responses may comprise a single candidate service level response of the selected candidate service level responses or a plurality of candidate service level responses of the selected candidate service level responses.

It may be that the output 3 is in data communication with the computer platform. It may be that the processing circuitry 2 is to provide the output signal to the computer platform. It may be that the computer platform is to apply the selected service level response or responses in response to the signal. It may be that, in response to the output, the computer platform is to provide a prompt to a user on a user interface thereof, such as a display screen, informing the user to the selected service level response or responses. The prompt may ask for user input to confirm whether the selected response or responses should be applied. The computer platform may be to apply the response or responses depending on a user input confirming that it/they should be applied.

The processing circuitry 2 may be special purpose processing circuitry which is configured to perform, in hardware, the functionality attributed to the processing circuitry 2 herein. Alternatively, the processing circuitry 2 may comprise general purpose processing circuitry, such as a general purpose processor, coupled to a memory storing computer program instructions executable by the general purpose processing circuitry to perform the functionality attributed to the processing circuitry 2 herein.

For example, in the example of Fig. 2, in which features corresponding to those of the block diagram of Fig. 1 are provided with the same reference numerals, the processing circuitry 2 is in data communication with memory 6 storing computer program instructions 8, 10 executable by the processing circuitry 2, which may be general purpose processing circuitry. Memory 6 storing computer program instructions 8, 10 may be provided by the same memory as the memory 4 storing the candidate service level responses, or it may be discrete from memory 4. It may be that memory 6 is provided on a non-transitory computer readable medium.

Computer program instructions 8 may be executable by the processing circuitry 2 to determine, depending on the alert 5a, for an operating system service or for each of a selected plurality of operating system services of the plurality of operating system services, the operating system service or the selected plurality of operating system services being related to the alert 5a, a candidate service level response to the intrusion or a plurality of candidate service level responses to the intrusion associated with that service. For example, computer program instructions 8 may be executable by the processing circuitry 2 to select, depending on the alert 5a, for the operating system service or for each of the selected plurality of operating system services related to the alert 5a, a candidate service level response or a plurality of candidate service level responses to the intrusion associated with that service from the memory 4. Computer program instructions 10 may be executable by the processing circuitry 2 to provide an output depending on the candidate service level response or candidate service level responses determined in respect of the operating system service or operating system services related to the alert 5a or a subset thereof as above.

It may be that the processing circuitry 2 is to select the candidate service level response or candidate service level responses from the memory 4 depending on the selected candidate service level response or candidate service level responses meeting cost effectiveness criteria. It may be that the cost effectiveness criteria are service specific cost effectiveness criteria. It may be that the processing circuitry 2 is to select the candidate service level response or candidate service level responses associated with the respective service or services from a plurality of candidate service level responses of the memory 4 by determining whether each of the said plurality of candidate service level responses meet the said cost effectiveness criteria and selecting the candidate service level response or responses of the said plurality meeting the said cost effectiveness criteria. It may be the processing circuitry 2 is to return a NULL response, for example from memory 4, for an operating system service related to the alert, such as an operating system service related to a malicious behavior associated with the alert, in dependence on a determination that the candidate service level response or candidate service level responses for that operating system service do not meet the said cost effectiveness criteria.

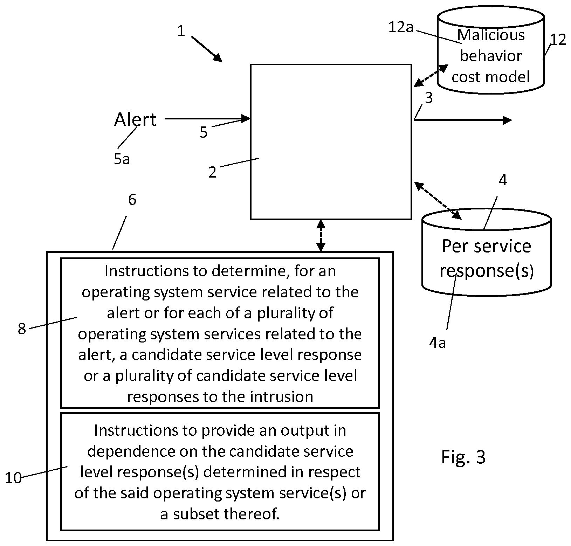

As shown in the example of Fig. 3, in which features corresponding to those in Figs. 1 and 2 are provided with the same reference numerals, it may be that the processing circuitry 2 is in data communication with a memory 12 storing a malicious behavior cost model 12a. It may be that memory 12 is part of the same memory as memory 4 storing the candidate service level responses and the memory 6, where provided, storing computer program instructions executable by the processing circuitry 2, or it may be that the memory 12 is a discrete memory from the memory 4 storing the candidate service level responses and the memory 6, where provided, storing computer program instructions executable by the processing circuitry 2.

The malicious behavior cost model 12a stored in memory 12 may provide a mapping between a malicious behavior associated with the received alert 5a and a qualitative or quantitative impact or cost of that malicious behavior. For example, the malicious behavior cost model 12a may comprise a text file that associates a malicious behavior to a qualitative or quantitative cost. The malicious behavior or behaviors associated with the alert 5a may be identified by the alert 5a itself, which as discussed above may be provided by an IDS, or a mapping may be provided either in model 12a or in another model, such as model 22a discussed below, between the alert and malicious behavior or behaviors.

It may be that the qualitative or quantitative impact or cost of the malicious behavior is provided on a per service basis. That is, it may be that the malicious behavior cost model 12a maps the malicious behavior, for an operating system service or for each of a plurality of operating system services affected by the malicious behavior, to a qualitative or quantitative cost of the malicious behavior specifically in relation to that service. For example it may be that the malicious behavior cost model maps a malicious behavior "Compromising data availability" to a cost of that behavior as follows "Compromising data availability: cost = high".

It may be that the processing circuitry 2 is to select the candidate service level response or responses to the intrusion from the memory 4 depending on an operating system service specific cost or operating system service specific costs of the malicious behavior. For example, it may be that the processing circuitry 2 is to select from the memory 4, for the operating system service or for each of the selected plurality of operating system services related to the alert 5a, the candidate service level response or the plurality of candidate service level responses depending on a service specific risk indicator indicative of a risk level of a malicious behavior associated with the alert 5a in relation to that service. It may be that the processing circuitry 2 is to determine the respective service specific risk indicator indicative of the respective risk level of the malicious behavior associated with the alert 5a in relation to the operating system service or to each of the selected plurality of operating system services related to the alert 5a depending on the operating system service specific cost of the malicious behavior in relation to that service provided by the malicious behavior cost model 12a stored in memory 12.

It may be that the processing circuitry 2 is to determine the respective service specific risk indicator indicative of the respective risk level of the malicious behavior associated with the alert 5a in relation to the operating system service or to each of the said selected plurality of operating system services related to the alert 5a depending on a confidence indicator associated with the alert 5a, the confidence indicator being indicative of a confidence that the alert 5a is a true positive alert. It may be that the confidence indicator is provided, for example as part of or together with the alert 5a, by the IDS. It may be that the confidence indicator is subject to change over time, depending on a confidence level with which the IDS considers the alert to be a true positive alert.

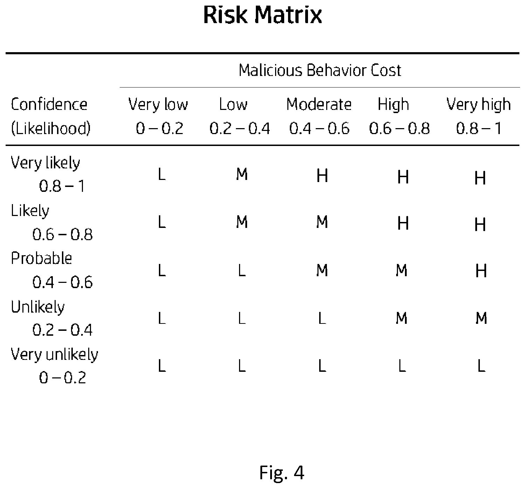

It may be that the processing circuitry 2 is to determine the respective service specific risk indicator indicative of the respective risk level of the malicious behavior associated with the alert 5a in relation to the operating system service or to each of the said selected plurality of operating system services related to the alert 5a depending on a risk policy. It may be that the risk policy is predetermined or set by a system administrator. It may be that the risk policy can be updated or changed, for example dynamically, by the administrator. As shown in the example of Fig. 4, it may be that the risk policy is implemented in the form of a risk matrix which maps a confidence that the alert 5a is a true positive alert and the operating system service specific cost of the malicious behavior in relation to an operating system service to a respective service specific risk indicator indicative of a respective risk level of the malicious behavior in relation to that operating system service.

In the example of Fig. 4, the confidence that the alert 5a is a true positive alert 5a is plotted on the y-axis, with the operating system service specific cost of the malicious behavior in relation to that service being plotted on the x-axis. Both the confidence level and the operating system service specific cost of the malicious behavior in relation to that service are expressed as a value between 0 and 1, the lower the value the lower the confidence level or cost, the higher the value the higher the confidence level or cost. On each axis, the range between 0 and 1 is split into five equal subdivisions spanning a particular sub-range to form a 5x5 array of cells arranged in a matrix. Each cell of the matrix is allocated a risk indicator indicative of a qualitative risk level: L, indicative of low risk level; M, indicative of medium risk level; or H, indicative of high risk level. More or fewer possible risk levels may be provided. The risk indicators allocated to the cells may be varied to implement different or updated risk policies. For example, a more risk averse risk policy may allocate more cells of the matrix with a H risk indicator and fewer with L or M risk indicators, while a more risk seeking risk policy may allocate more cells of the matrix with a L risk indicator and fewer with M or H risk indicators. It will be understood that the matrix may be arranged in any suitable form, with any suitable number of cells. Indeed, the risk policy may be implemented in any suitable form as an alternative to the matrix. Whilst the "L", "M" and "H" risk indicators are qualitative, the risk indicators may be qualitative or quantitative.

It may be that the processing circuitry 2 is to determine the respective service specific risk indicator indicative of the respective risk level of the malicious behavior associated with the alert 5a in relation to the operating system service or to each of the said selected plurality of operating system services related to the alert 5a by mapping the confidence that the alert 5a is a true positive alert and the operating system service specific cost of the malicious behavior in relation to that operating system service to a risk indicator of the risk matrix. It will be understood that the risk indicator to which the confidence level and operating system service specific cost are mapped is a service specific risk indicator by virtue of the behavior cost being service specific.

A candidate service level response is more likely to be considered cost effective in the event that the confidence indicator is higher than if the confidence indicator is lower. Similarly, a candidate service level response is more likely to be considered cost effective in the event that the cost of a malicious behavior in relation to that service is higher than if it was lower. Similarly, a candidate service level response is more likely to be considered cost effective in the event that the risk policy is risk averse than if it was risk seeking, for example such that the risk indicators of more of the cells are indicative of a high risk level than the relatively risk seeking risk matrix of the example of Fig. 4. This is because, for a given cost of applying a candidate service level response, it is more likely to be considered to be cost effective for a service having a high risk level than for a service having a low risk level. Accordingly the service specific risk indicator mapping provided by the risk matrix may help to inhibit candidate service level responses from being selected if, for example, there is a low confidence level that the alert 5a is a true positive alert, the cost of the malicious behavior in respect of the service related to the candidate service level response is low or the risk policy is risk seeking. Similarly, the service specific risk indicator mapping provided by the risk matrix may help to encourage selection of candidate service level responses if, for example, there is a high confidence level that the alert 5a is a true positive alert, the cost of the malicious behavior in respect of the service related to the candidate service level response is high or the risk policy is risk averse.

It may be that the memory 4 stores associations between the candidate service level response or responses related to the alert 5a and respective response cost indicator or indicators indicative of the cost or costs of applying the respective candidate service level response or responses. The associations may be stored in, for example, a text file in which each of the candidate service level responses is associated with a respective cost indicator indicative of the cost of applying that response. It may be that the respective response cost indicators are indicative of per service costs of applying the respective response. For example, removing the ability to listen on port 80 may have a higher cost for a hypertext transfer protocol, HTTP, server than for other services. Alternatively it may be that the respective cost indicators are indicative of system wide costs, which may be for example costs to the computer platform running the operating system as a whole.

When defining per service response costs, it may be that some responses are grouped together in order that the costs can be allocated to groups for brevity. For example "BlockSystemCall = @network-input/output: high @resources: low" may indicate that responses which block system calls relating to sending and receiving by way of the network, such as blocking system calls that allow connection to a socket, have a high cost while blocking system calls that allow access to resources have a low cost.

It may be that the processing circuitry 2 is to update, for example dynamically, the response cost indicators indicative of the response costs of the candidate service level responses in dependence on usage of the individual services of the operating system of the computer platform. For example, it may be that the processing circuitry 2 is to update a response cost indicator to indicate an increased response cost for a candidate service level response which affects a service which is used more often over a given time period than over a previous time period, and it may be that the processing circuitry 2 is to update a response cost indicator to indicate a decreased response cost for a candidate service level response which affects a service which is used less often over a given time period than over a previous time period. It may be that the processing circuitry 2 is to receive usage data relating to usage of the respective operating system services from the computer platform, and to determine or update the response cost indicators indicative of the costs of applying candidate service level responses which affect those services in dependence on the usage data.

It may be that the processing circuitry 2 is to select the candidate service level response or responses to the intrusion depending on the respective response cost indicators relating to the candidate service level response or responses. The response cost indicators may be qualitative or quantitative. The response cost indicators may be comparable to the service specific risk indicators to enable the cost effectiveness of the responses to be ascertained at least partly from a comparison of the response cost indicators with the service specific risk indicators associated with the services in respect of which the candidate service level responses can be applied.

It may be that the processing circuitry 2 is to select, for the operating system service or for each of the selected plurality of operating system services related to the alert 5a, the candidate service level response or the selected plurality of candidate service level responses depending on the service specific risk indicator indicative of the risk level of a malicious behavior associated with the alert 5a in relation to that service and a respective response cost indicator or indicators indicative of the cost or costs of applying the respective candidate service level response or responses associated with that service. For example, it may be that the processing circuitry 2 is to, for the operating system service or for each of the selected plurality of operating system services related to the alert 5a, compare the service specific risk indicator indicative of the risk level of the malicious behavior associated with the alert 5a in relation to that service to the respective response cost indicator or indicators indicative of the cost or costs of applying the respective candidate service level response or responses associated with that service, and select a candidate service level response or a plurality of candidate service level responses associated with that service depending on that comparison. For example, if the cost of applying a respective candidate service level response associated with a particular service indicated by the response cost indicator for that candidate service level response is greater, for example qualitatively or quantitatively, than the risk level of the behavior in relation to that service indicated by the service specific risk indicator for that service, it may be that the processing circuitry 2 is to not select the respective candidate service level response. On the other hand, if the cost of applying a respective candidate service level response associated with a particular service indicated by the response cost indicator for that candidate service level response is less, for example qualitatively or quantitatively, that the risk level of the behavior in relation to that service indicated by the service specific risk indicator for that service, it may be that the processing circuitry 2 is to select the respective candidate service level response.

By selecting from the memory 4 the candidate service level response or the plurality of candidate service level responses depending on the service specific risk indicators and the respective response cost indicators, it can be better ensured that the selected candidate service level response or responses are cost effective in mitigating the malicious behavior or intrusion.

It may be that the processing circuitry 2 is to select the candidate service level response or the selected plurality of candidate service level responses in dependence on a variable parameter or parameters, for example a dynamically variable parameter or parameters, such as any of: the confidence indicator indicating a confidence level of the alert; the risk policy; the respective response cost indicators indicative of costs of applying the respective responses. This allows changes in variable parameters to be accounted for when selecting the candidate service level response or the candidate service level responses. It may be that the processing circuitry 2 is to select the candidate service level response or the plurality of candidate service level responses from a plurality of candidate service level responses of the memory 4 in dependence on a variable parameter or on a plurality of variable parameters. This allows different candidate service level responses to be selected depending on the variable parameter or parameters. This may be beneficial because a candidate level response of the plurality of candidate service level responses of the memory 4 may become more cost effective in dependence on a change to a variable parameter. Similarly, a candidate service level response of the plurality of candidate service level responses of the memory 4 may become less cost effective in dependence on a change to a variable parameter.

It may be that the memory 4 stores an association between the candidate service level responses to the intrusion and respective efficacy indicators indicative of efficacies of the candidate service level responses in mitigating the malicious behavior or an intrusion associated with the alert 5a. The efficacy indicators may be binary. For example one of a binary 1 or a binary 0 may be indicative that the candidate service level response is effective in mitigating the behavior or the intrusion, while the other of the binary 1 or binary 0 may be indicative that the candidate service level responses is not effective in mitigating the behavior or intrusion. Alternatively, it may be that the efficacy indicators are on a scale having more than two potential values.

It may be that the processing circuitry 2 is to select from the memory 4, for the operating system service or for each of the said selected plurality of operating system services related to the alert 5a, the candidate service level response or the selected plurality of candidate service level responses depending on respective efficacy indicators indicative of efficacies of the candidate service level response or candidate service level responses in mitigating a malicious behavior or the intrusion associated with the alert 5a. For example, it may be that the processing circuitry 2 is to select from the memory 4 the candidate service level response or candidate service level responses each having an efficacy indicator indicative that the candidate service level response meets effectiveness criteria indicative that it is effective in mitigating the behavior or intrusion, such as a binary efficacy indicator indicating that the response is effective, or an efficacy indicator on a scale having more than two possible values being above or below a predetermined threshold. It may be that the candidate service level response or the plurality of candidate service level responses of the memory 4 which are selectable in response to the alert are predetermined to be effective in mitigating a malicious behavior or intrusion associated with the alert, such as by having a binary efficacy indicator indicating that the response is effective, or an efficacy indicator on a scale having more than two possible values being above or below a predetermined threshold.

Additionally or alternatively, it may be that the processing circuitry 2 is to compare efficacy indicators associated with the plurality of candidate service level responses of the said memory 4 associated with the same operating system service affected by the malicious behavior or intrusion associated with the alert 5a, and select the candidate service level response or candidate service level responses having an efficacy indicator or efficacy indicators indicating that they provide effective mitigation to the malicious behavior or intrusion.

It may be that the processing circuitry 2 is to select from the memory 4, for the said operating system service or for each of the said selected plurality of operating system services related to the alert 5a, the candidate service level response or the selected plurality of candidate service level responses depending on the respective efficacy indicators associated with the candidate service level responses, on the service specific risk indicator indicative of the risk level of the malicious behavior associated with the alert 5a in relation to that service and on the respective response cost indicators indicative of costs of applying the respective candidate service level responses. For example, for the operating system service or for each of the operating system services associated with the alert 5a, the processing circuitry 2 may be to take into account the efficacy indicator indicative of the efficacy of, and the response cost indicator indicative of the cost of applying, the said candidate service level response or responses associated with that service together with the service specific risk indicator of the malicious behavior in respect of the service, in the selection of the candidate service level response or responses in relation to that service. If the response cost indicator is indicative that the qualitative or quantitative cost of applying a particular response is high and the efficacy indicator is indicative that the efficacy of the response in respect of the behavior or intrusion is low or medium, it may not be cost effective to apply the candidate service level response even if the service specific risk indicator is indicative that the risk level of the malicious behavior in relation to that service is high. This may cause the cause the processing circuitry 2 to not select the candidate service level response. If the response cost indicator is indicative that the cost of applying a particular response is high and the efficacy indicator is indicative that the efficacy of the response in respect of the behavior or intrusion is high, it may be cost effective to apply the candidate service level response when the service specific risk indicator is indicative that the risk level of the malicious behavior in relation to that service is high. This may cause the processing circuitry 2 to select the candidate service level response.

In one example, the processing circuitry 2 may be to determine if the service specific risk indicator is indicative of a low risk level of the malicious behavior in relation to a particular service, for example qualitatively or quantitively in comparison with a predetermined threshold. If the processing circuitry 2 determines that the service specific risk indicator is indicative of a low risk level of the malicious behavior in relation to the service, it may be that the processing circuitry 2 is to not select a candidate service level response in relation to that service, or to return a NULL response in respect of that service, in response thereto. If the service specific risk indicator is indicative of a high risk level of the malicious behavior in relation to the service, it may be that the processing circuitry 2 is to inspect the efficacy indicators indicative of the efficacies of the candidate service level response or responses associated with that service. If the efficacy of a candidate service level response indicates that its efficacy is low, for example qualitatively or quantitively in comparison with a predetermined threshold, it may be that the processing circuitry 2 is to not select that candidate service level response. If there are no candidate service level responses associated with the respective service having efficacy indicators indicative of high efficacies, it may be that the processing circuitry 2 is to return a NULL response in respect of that service. For any candidate service level response or responses associated with the respective service having efficacy indicators indicative of high efficacies, it may be that the processing circuitry 2 is to inspect the response cost indicator or indicators indicative of the cost or costs of that candidate service level response or those candidate service level responses. For any candidate service level responses having efficacy indicators indicative of high efficacies relating to respective operating system services having service specific risk indicators indicative of high risk levels, it may be that the processing circuitry 2 is to not select any candidate service level responses having response cost indicators indicative of high response costs, for example qualitatively or quantitively in comparison with a predetermined threshold. For any candidate service level responses having efficacy indicators indicative of high efficacies relating to respective operating system services having service specific risk indicators indicative of high risk levels, it may be that the processing circuitry 2 is to select the candidate service level response or responses having response cost indicator or indicators indicative of low response costs, for example qualitatively or quantitively in comparison with a predetermined threshold. It may be that the threshold is dependent on a risk policy which may be predetermined or set by an administrator. As indicated above, the risk policy may be updatable, for example dynamically updatable. If there are no candidate service level responses for the service having efficacy indicators indicative of high efficacies and response cost indicators indicative of low response costs it may be that the processing circuitry is to return a NULL response for that service.

In another example, it may be that for each of the candidate service level responses, the processing circuitry 2 is to combine the efficacy indicator associated with the candidate service level response and response cost indicator indicative of the cost of applying the candidate service level response to determine a combined indicator and compare the combined indicator to the risk level indicated by the service specific risk indicator for the service in respect of which the candidate service level response can be applied to determine whether it would be cost effective to apply the candidate service level response. It may be that the processing circuitry 2 is to select candidate service level response or responses relating to an operating system service or operating system services related to the alert which are determined to be cost-effective. For example, for candidate service level responses associated with quantitative efficacy and cost indicators, the cost indicator may be divided by the efficacy indicator or the square of the cost indicator may be divided by the efficacy indicator to determine a quantitative combined indicator, which may be compared to a quantitative service specific risk indicator to determine whether that candidate service level response is cost-effective. It may be that the cost indicator, efficacy indicator and service specific risk indicator are weighted in order to apply priority levels to any of those parameters in respect of the others.

By taking into account the efficacy indicators, the processing circuitry 2 can better select cost effective candidate service level responses from the memory 4.

Any suitable alternative ways of taking into account any of efficacy indicators, response cost indicators, service specific risk indicators to determine whether to select the candidate service level response or responses may be employed. Indeed, any suitable way of selecting a suitable candidate service level response or suitable candidate service level responses to cost effectively mitigate the intrusion may be employed.

As mentioned above, the processing circuitry 2 may be to select a plurality of candidate service level responses in respect of the operating system service or services related to the alert, and to select a subset therefrom comprising a service level response or a plurality of service level responses and provide a signal to the output 3 depending on the selected service level response or responses. In this case, it may be that the processing circuitry 2 is to select the said service level response or responses depending on one or both of respective response cost indicators and respective efficacy indicators associated with the respective candidate service level responses.

As mentioned above, the processing circuitry 2 may be to select a plurality of candidate service level responses from the memory 4. The selected plurality of candidate service level responses may be a plurality of candidate service level responses in respect of an operating system service related to the alert 5a or a candidate service level response or a plurality of candidate service level responses in respect of each of a plurality of operating system services related to the alert 5a. The processing circuitry 2 may be to perform an optimization to select a subset of the candidate service level responses selected in respect of the operating system service or operating system services. The processing circuitry 2 may be to base the output on the subset of service level responses selected by the optimization in order to reduce the overall cost of responding to the intrusion. The processing circuitry 2 may be to perform an optimization in respect of the candidate service level responses selected in respect of the operating system service or operating system services depending on a constraint or on a plurality of constraints. The constraints may comprise risk information indicative of an attitude to risk. For example, a risk threshold may be set by an administrator, or a predetermined risk threshold may be set. The risk threshold may be updatable, for example dynamically updatable.

As mentioned above, the subset of candidate service level responses may comprise a single service level response or a plurality of service level responses. It may be that the processing circuitry 2 is to select a service level response or a plurality of service level responses on which to base the output from the candidate service level responses selected in respect of the operating system service or operating system services depending on one or both of respective response cost indicators and respective efficacy indicators associated with the respective candidate service level responses, for example to maximise the efficacy of the selected service level response or responses to mitigate the behavior or the intrusion whilst keeping the cost of applying the response or responses below the risk threshold. This may be done, for example, by using an optimization such as a linear optimization, for example together with discrete assigned quantitative values for response cost and efficacy in respect of each of the candidate service level response or responses. The selection may also take into account the risk information. By setting the risk threshold appropriately, a desired balance between the efficacy of the selected service level responses in mitigating behavior and the cost of applying those responses can be obtained.

In another example, a goal-oriented action planning model may be used to select the service level response or responses on which to base the output from the selected candidate service level responses. In this case, a goal may be set. For example, the goal may be to achieve a state of the operating system in which the intrusion is mitigated and all services are restored such that attackers can no longer achieve their goals. It may be that the processing circuitry 2 is to select the service level response or responses from the selected candidate service level responses to achieve the set goal with the lowest cost of applying the responses to the computer platform. If the goal cannot be achieved, it may be that a revised goal is set and the processing circuitry 2 is to select the service level response or responses from the selected candidate service level responses to achieve the revised goal with the lowest cost of applying the response or responses to the computer platform. This iterative procedure can be repeated until the goal is achievable.

Any suitable optimization technique may be utilized.

It may be that the optimization is constrained to select at least one service level response from the candidate service level response or responses selected for each of the operating system services related to the alert in respect of which a candidate service level response is selected. Alternatively, it may be that the optimization does not distinguish between the selected candidate service level responses in dependence on the operating system services to which they relate.

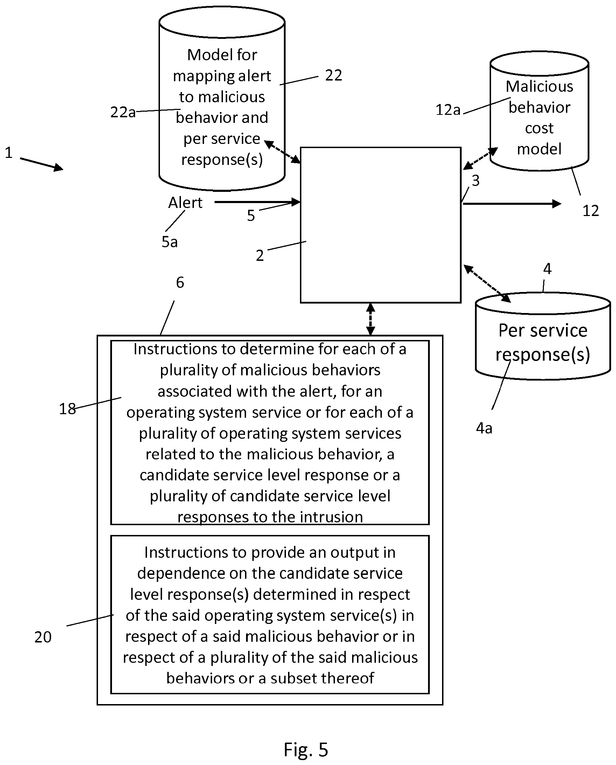

It may be that an alert 5a received by the processing circuitry 2 is associated with a single malicious behavior or with a plurality of malicious behaviors. If a plurality of malicious behaviors is associated with the alert 5a, it may be that the operating system service or services related to the alert 5a in respect of which a candidate service level response or a plurality of candidate service level responses is selected may be a subset of operating system services related to the alert 5a, such as an operating system service or a plurality of operating system services related to the alert 5a which is affected by a particular malicious behavior of the said plurality of malicious behaviors. As illustrated in the example of Fig. 5, it may be that the processing circuitry 2 is in data communication with a memory 22 storing a model 22a for mapping the alert 5a to a malicious behavior or to a plurality of malicious behaviors associated with the alert 5a. It may be that the memory 22 is part of the same memory storing any of: the memory 4 storing the candidate service level responses; the memory 6, where provided, storing computer program instructions executable by the processing circuitry 2; the memory 12 storing the malicious behavior cost model. Alternatively, the memory 22 may be discrete from the memories 4, 6 and 12. If a plurality of malicious behaviors is associated with the alert 5a, it may be that the memory 12 stores malicious behavior cost models 12a in respect of each of the malicious behaviors associated with the alert 5a. It may be that a plurality of malicious behaviors is associated with the alert 5a because, for example, it is known that the plurality of malicious behaviors together causes the alert 5a, or because one of the plurality of malicious behaviors could have caused the alert 5a.

If a plurality of malicious behaviors is associated with an alert 5a, it may be that the processing circuitry 2 is to select from the memory 4, for each of the plurality of malicious behaviors, for an operating system service related to the respective malicious behavior or for each of a selected plurality of operating system services related to the respective malicious behavior, a candidate service level response or a plurality of candidate service level responses to the intrusion associated with that malicious behavior and with that service. This is illustrated in the example of Fig. 5 by the memory 6 storing instructions 18 executable by the processing circuitry 2 to determine, for each of a plurality of malicious behaviors, for an operating system service or for each of a selected plurality of operating system services related to the respective malicious behavior, a candidate service level response or a plurality of candidate service level responses, for example by selecting the candidate service level response or responses from the memory 4. The selection of the candidate service level response or candidate service level responses for each of the malicious behaviors may be performed in any of the ways disclosed herein. This enables the candidate service level response or candidate service level responses to be efficiently selected for each of the malicious behaviors associated with the alert 5a.

The processing circuitry 2 may be to provide a signal to the output 3 depending on the candidate service level response or responses selected in respect of the said operating system service or services in respect of a malicious behavior or in respect of a plurality of malicious behaviors associated with the alert, or on a subset thereof. For example, the processing circuitry 2 may be to provide respective signals to the output 3 depending on the candidate service level response or responses, or a subset thereof, selected in respect of each of the malicious behaviors individually, or the processing circuitry 2 may be to provide a signal to the output depending on the candidate service level responses selected in respect of the plurality of malicious behaviors together or a subset thereof. This is illustrated in Fig. 5 by instructions 20 stored in memory 6 and being executable by the processing circuitry 2 to provide an output depending on the candidate service level response or responses determined in respect of the operating system service or services in respect of a said malicious behavior or in respect of a plurality of the malicious behaviors, or a subset thereof. The processing circuitry 2 may be to determine a subset of candidate service level responses selected in respect of an individual malicious behavior, or in respect of a plurality of malicious behaviors together, by running an optimization on the candidate service level responses selected for that malicious behavior or for those malicious behaviors as described herein to thereby select a service level response or a plurality of service level responses on which to base the respective output.

In an example, it may be that the processing circuitry 2 is to apply an optimization separately to a respective plurality of candidate service level responses selected in respect of each of a plurality of malicious behaviors associated with the alert 5a, to thereby select a service level response or responses in respect of each malicious behavior and provide respective signals to the output 3 corresponding thereto. In this case, it may be that an optimization is not applied in respect of any malicious behaviors in respect of which a single candidate service level response is selected. In another example, it may be that the processing circuitry 2 is to apply an optimization to the candidate service level responses selected in respect of all of the malicious behaviors associated with the alert 5a together, to thereby select service level response or responses to the intrusion and to provide a signal to the output 3 corresponding thereto.

As mentioned above, it may be that the memory 4 stores a candidate service level response or a plurality of candidate service level responses to each of a plurality of malicious behaviors related to an intrusion. Irrespective of whether one malicious behavior or a plurality of malicious behaviors are associated with the alert 5a, it may be that, for each of the malicious behaviors associated with the alert 5a, the model 22a in memory 22 maps each of the malicious behaviors related to the intrusion to a candidate service level response or to a respective plurality of candidate service level responses of the memory 4, the candidate service level response or responses being a response or responses to the intrusion in respect of a respective operating system service or services affected by that malicious behavior. It may be that the operating system service or the selected plurality of operating system services related to the alert is an operating system service or are operating system services associated with candidate service level response or candidate service level responses to which the malicious behavior is mapped in model 22a.

It may be that memory 22 stores respective models 22a for mapping each of a plurality of different alerts to a respective malicious behavior or to respective malicious behaviors. In this case, the mapping of the alert to malicious behaviors, malicious behaviors to operating system services affected by the malicious behaviors and the candidate system level responses for mitigating the malicious behaviors may be different for each of the alerts, and thus for each of the models 22a.

It may be that the model or models of memory 22 are based at least in part on empirical evidence. For example, it may be that associations between alerts and malicious behaviors is determined empirically. It may be that a determination as to which operating system services are affected by each of the said malicious behaviors can be made based on empirical evidence. These may include an operating system service directly affected by the respective malicious behavior and an operating system service or a plurality of operating system services affected by disruption or failure to the service directly affected by the behavior. Indeed, any of the following may be determined based on empirical evidence: which candidate service level responses in relation to which operating system services mitigate specific malicious behaviors or the intrusion; the efficacy indicators of the candidate service level responses in mitigating the malicious behavior or an intrusion associated with the alert 5a; the per service costs of the respective malicious behaviors; the response cost indicators indicative of costs of applying the respective candidate service level responses. Thus, the mapping in the model or models 22a of memory 22 between alerts, malicious behaviors, operating system services affected by malicious behaviors and candidate service level responses for mitigating malicious behaviors in respect of individual malicious behaviors may be based at least in part on empirical evidence.

In addition or as an alternative to using empirical evidence, it may be that the model or models 22a of memory 22 are determined at least in part by machine learning. For example, it may be that any of the following are determined by machine learning: associations between the alert and a malicious behavior or malicious behaviors; which operating system services are affected by each of the said malicious behaviors; which candidate service level responses in relation to which operating system services mitigate specific malicious behaviors or the intrusion; the efficacy indicators of the candidate service level responses in mitigating the malicious behavior or an intrusion associated with the alert 5a; the per service costs of the respective malicious behaviors; the response cost indicators indicative of costs of applying the respective candidate service level responses. Thus, the mapping in the models 22a of memory 22 between alerts, malicious behaviors, operating system services affected by malicious behaviors and candidate service level responses for mitigating malicious behaviors in respect of individual malicious behaviors may be determined at least in part by machine learning.

The model or models 22a of memory 22 may be stored in a database format.

Thus, it may be that when the processing circuitry 2 receives the alert 5a, it is to map the alert 5a to a malicious behavior or a plurality of malicious behaviors related to an intrusion to the operating system associated with the alert 5a, and, for each of the malicious behaviors, to a candidate service level response or candidate service level responses associated with that malicious behavior, the candidate service level response or responses relating to an operating system service or operating system services affected by that malicious behavior. The processing circuitry 2 may then select a candidate service level response or candidate service level responses in respect of each of the said malicious behaviors, for example using respective malicious behavior models 12a, and provide an output as described above. Alternatively, such mapping may be performed by the IDS and the mapping information may be received by the processing circuitry 2 from the IDS.

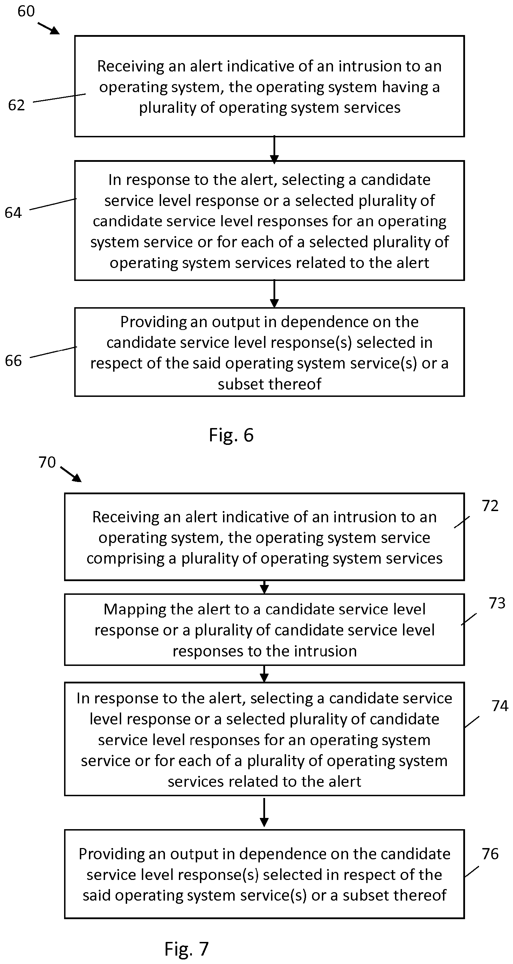

Fig. 6 is a flow chart illustrating an example method 60 of determining how to respond to an alert indicative of an intrusion to an operating system running on a computer platform, the operating system having a plurality of operating system services. At 62, an alert indicative of an intrusion to the operating system is received. At 64, in response to the alert, a candidate service level response or a plurality of candidate service level responses are selected from a memory for an operating system service or for each of a selected plurality of operating system services related to the alert. At 66, an output is provided in dependence on the candidate service level response or responses selected in respect of the said operating system service or services, or in dependence of a subset of candidate service level responses selected in respect of the said operating system service or services related to the alert. The output may be an indication to the computer platform to apply the selected service level response or responses, or the output may cause the computer platform to apply the selected service level response or responses.

Fig. 7 illustrates an example method 70 based on the method of Fig. 6, but in which at 73, between 72 and 74 which correspond to 62 and 64 above, the alert is mapped to a candidate service level response or to a plurality of candidate service level responses to the intrusion. Mapping the alert to a candidate service level response or to a plurality of candidate service level responses to the intrusion may comprise mapping the alert to a malicious behavior and mapping the malicious behavior to the said candidate service level response or to the plurality of candidate service level responses. At 74, in response to the alert, a candidate service level response or a selected plurality of candidate service level responses is selected from the candidate service level response or the plurality of candidate service level responses to which the alert is mapped at 73, for an operating system service or for each of a selected plurality of operating system services related to the alert. At 76, as before, an output is provided in dependence on the candidate service level response or responses selected in respect of the said operating system service or services or on a subset of the selected candidate service level responses.

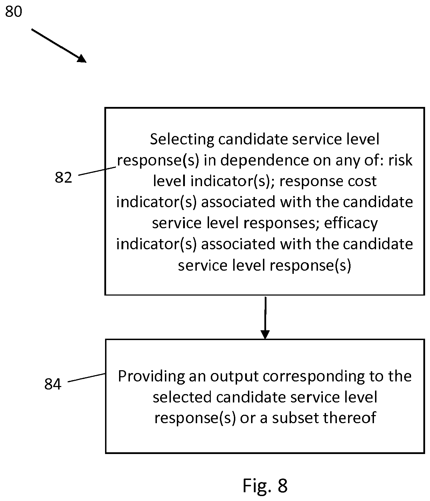

Fig. 8 illustrates an example method 80 of selecting a candidate service level response or a selected plurality of candidate service level responses to an intrusion associated with an alert. At 82, for the operating system service or for each of the operating system services related to the alert, the candidate service level response or each of the plurality of selected candidate service level responses may be selected in dependence on any of: a service specific risk indicator indicative of a risk level of a malicious behavior associated with the alert in respect of the operating system service, the operating system service being affected by the malicious behavior; a response cost indicator or response cost indicators indicative of the cost or costs of applying the candidate service level response or the candidate service level responses of the plurality of candidate service level responses; an efficacy indicator or efficacy indicators indicative of an efficacy or efficacies with which the candidate service level response or responses mitigate a malicious behavior or the intrusion associated with the alert.

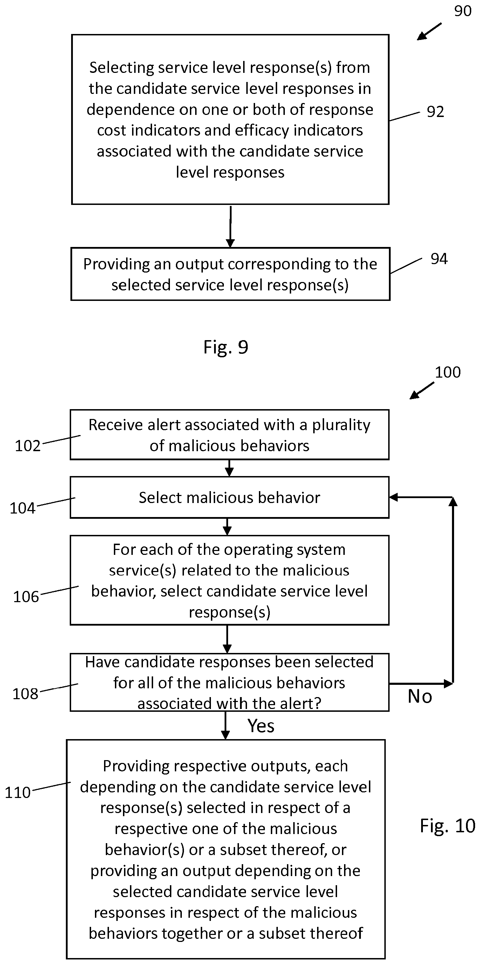

As discussed above, it may be that the processing circuitry 2 selects a selected plurality of candidate service level responses, such as a selected plurality of candidate service level responses in respect of an operating system service related to the alert or a candidate service level response or a plurality of candidate service level responses in respect of each of a plurality of operating system services related to the alert. Fig. 9 illustrates an example method 90 of selecting a subset of service level responses comprising a service level response or a plurality of service level responses on which to base the output from the selected plurality of candidate service level responses. At 92, a service level response or a plurality of service level responses is selected from the selected plurality of candidate service level responses in dependence on one or both of respective response cost indicators indicative of respective costs of applying the candidate service level responses of the said selected plurality of candidate service level responses and respective efficacy indicators indicative of respective efficacies with which the candidate service level responses of the said selected plurality of candidate service level responses mitigate a malicious behavior or the intrusion associated with the alert. For example, at 92, an optimization may be performed in order to select the service level response or the selected plurality of service level responses from the selected plurality of candidate service level responses, for example as discussed above. At 94, an output may be provided corresponding to the subset comprising the selected service level response or responses. As before, the output may be an indication to the computer platform to apply the selected service level response or responses, or the output may cause the computer platform to apply the selected service level response or responses.

Fig. 10 illustrates an example method 100 of determining how to respond to an intrusion to the operating system in response to an alert associated with a plurality of malicious behaviors. The plurality of malicious behaviors may be a plurality of malicious behaviors which together are known to cause the alert, or the plurality of malicious behaviors may be a plurality of malicious behaviors each of which may be individually known to cause the alert. At 102, an alert associated with a plurality of malicious behaviors is received. The association between the alert and the plurality of malicious behaviors may be received as part of or together with the alert, which may be received from an IDS for example, or the association between the alert and the plurality of malicious behaviors may be determined with reference to a model which maps the alert to the plurality of malicious behaviors. At 104, one of the malicious behaviors is selected. At 106, for an operating system service affected by the malicious behavior or for each of a selected plurality of operating system services affected by the malicious behavior, a candidate service level response or a plurality of candidate service level responses may be selected, for example from memory such as the memory 4. This selection may be performed by any suitable method, such as any suitable method disclosed herein. For example, the candidate service level response or responses may be selected from a candidate service level response or a plurality of candidate service level responses which may be mapped to the malicious behavior by a model such as model 22a discussed above or by the alert. The candidate service level response or each of the plurality of candidate service level responses may be selected in dependence on any of: a service specific risk indicator indicative of a risk level of the malicious behavior in respect of the respective operating system service; a response cost indicator or response cost indicators indicative of the cost or costs of applying the candidate service level response or the candidate service level responses of the said plurality of candidate service level responses; an efficacy indicator or efficacy indicators indicative of an efficacy or efficacies with which the candidate service level response or responses mitigate the malicious behavior or the intrusion associated with the alert.

At 108 a determination is made as to whether candidate service level responses have been selected for all of the malicious behaviors associated with the alert. If not, 104-108 are repeated for the next malicious behavior of the plurality of malicious behaviors associated with the alert. If so, at 110 respective outputs may be provided in dependence on the candidate service level response or responses, or a subset thereof, selected in respect of each of the malicious behaviors individually. For example, for each of the malicious behaviors associated with the alert, a respective output may be provided based on the candidate service level response or on all of the candidate service level responses selected in respect of the malicious behavior or on a subset of the candidate service level responses selected in respect of the malicious behavior. In the latter case, the subset may be determined by an optimization, which may be implemented on the candidate service level responses selected in respect of the individual malicious behavior depending on one or both of respective cost indicators indicative of the costs of applying the candidate service level responses selected for that behavior and efficacy indicators indicative of the efficacies with which the candidate service level responses mitigate the malicious behavior or the intrusion. The optimization may also depend on risk information indicative of an attitude to risk.

In another example, at 110, the output may be determined depending on the candidate service level responses or a subset of the candidate service level responses selected in respect of all of the malicious behaviors associated with the alert together. In the latter case, the subset may be determined by an optimization, which may be implemented on the candidate service level responses selected in respect of all of the malicious behaviors associated with the alert together depending on one or both of respective cost indicators indicative of the costs of applying the candidate service level responses selected for the respective behaviors and efficacy indicators indicative of the efficacies with which the candidate service level responses selected for the respective malicious behaviors mitigate the malicious behavior or the intrusion. The optimization may also depend on risk information indicative of an attitude to risk.

It will be understood that the example methods of any of Figs. 6 to 10 may include features corresponding to any of the functionality of the processing circuitry 2, IDS or computer platform described above.

Any of the methods 60, 70, 80, 90, 100 may be performed by the processing circuitry 2.

Throughout the description and claims of this specification, the words "comprise" and "contain" and variations of them mean "including but not limited to", and they are not intended to, and do not, exclude other components or integers. Throughout the description and claims of this specification, the singular encompasses the plural unless the context indicates otherwise. In particular, where the indefinite article is used, the specification is to be understood as contemplating plurality as well as singularity, unless the context indicates otherwise. The invention is defined as set forth by the appended independent claims.

## Claims

1. Data processing apparatus (1) comprising:
a memory (4) storing a candidate service level response (4a) to an intrusion to an operating system having a plurality of operating system services;
processing circuitry (2) coupled to the memory (4); and
an output (3) coupled to the processing circuitry (2),
wherein the processing circuitry (2) is to:
receive an alert (5a) indicative of the intrusion;
identify, based on the alert (5a), an operating system service of the plurality of operating system services that is related to the intrusion indicated by the alert (5a);
select from the memory (4), for the identified operating system service the candidate service level response (4a) to the intrusion; and
provide a signal to the output (3) depending on the candidate service
level response (4a) selected in respect of the said operating system service;
wherein said output is an indication to a computer platform running the operating system to apply the selected service level response or responses, or the output causes the computer platform to apply the selected service level response or responses.

2. Data processing apparatus (1) according to claim 1 wherein the selected candidate service level response (4a) is to at least predominantly affect the operating system service in respect of which it was selected over the other operating system services of the operating system.

3. Data processing apparatus (1) according to claim 1 wherein the said operating system service related to the alert (5a) is an operating system service affected by a malicious behavior associated with the alert (5a).

4. Data processing apparatus (1) according to claim 1 wherein the processing circuitry (2) is to select from the memory (4), for the said operating system service related to the alert (5a), the candidate service level response depending on an operating system service specific risk indicator indicative of a risk level of a malicious behavior associated with the alert (5a) in relation to the said operating system service and a response cost indicator indicative of a cost of applying the candidate service level response.

5. Data processing apparatus (1) according to claim 4 wherein the service specific risk indicator is dependent on an operating system service specific cost of a malicious behavior associated with the alert (5a) in relation to that operating system service and none, one or both of: a confidence indicator associated with the alert (5a), the confidence indicator being indicative of a confidence that the alert is a true positive alert; and a risk policy.

6. Data processing apparatus (1) according to claim 4 wherein the processing circuitry (2) is to select from the memory (4), for the said operating system service related to the alert (5a), the said candidate service level response depending on an efficacy indicator indicative of an efficacy of the candidate service level response in mitigating the malicious behavior or an intrusion associated with the alert (5a).

7. Data processing apparatus (1) according to claim 1 wherein the candidate service level response is one of a plurality of candidate service level responses to the intrusion stored by the memory (4), and wherein the processing circuitry (2) is to, depending on an alert (5a) indicative of the intrusion:
select from the memory (4) a plurality of candidate service level responses in respect of an operating system service related to the alert (5a), or a candidate service level response or a plurality of candidate service level responses in respect of each of a plurality of operating system services related to the alert (5a); and
provide a signal to the output (3) depending on the selected candidate service level responses or on a subset of the selected candidate service level responses.

8. Data processing apparatus (1) according to claim 7 wherein the processing circuitry (2) is to select a service level response, or a plurality of service level responses, from the selected candidate service level responses depending on one or both of respective response cost indicators and respective efficacy indicators associated with the respective candidate service level responses, the respective response cost indicators being indicative of costs of applying the respective responses, the respective efficacy indicators being indicative of the efficacies of the respective responses in mitigating a malicious behavior or intrusion associated with the alert (5a), and to provide the said signal to the output (3) depending on the selected service level response or responses.

9. Data processing apparatus (1) according to claim 1 wherein the alert (5a) is associated with a plurality of malicious behaviors and, for each of the said plurality of malicious behaviors, the processing circuitry (3) is to:
select from the memory (4), for an operating system service of the plurality of operating system services affected by the malicious behavior or for each of a selected plurality of operating system services of the plurality of operating system services affected by the malicious behavior, a candidate service level response to the intrusion or a plurality of candidate service level responses to the intrusion.

10. Data processing apparatus (1) according to claim 9 wherein the processing circuitry (2) is to:
provide a signal to the output (3) depending on the candidate service level response or responses selected in respect of a malicious behavior of the said plurality of malicious behaviors or in respect of the said plurality of malicious behaviors or on a subset of the said selected candidate service level responses in respect of a malicious behavior of the said plurality of malicious behaviors or in respect of the said plurality of malicious behaviors.

11. A non-transitory machine-readable storage medium (6) encoded with instructions executable by a processor, the machine-readable storage medium comprising:
instructions to determine depending on an alert (5a) indicative of an intrusion to an operating system comprising a plurality of operating system services, for an operating system service of the said plurality of operating system services related to the alert (5a), a candidate service level response to an intrusion; and
instructions to provide an output (3) depending on the candidate service level
response determined in respect of the said operating system service; wherein said output is an indication to a computer platform running the operating system to apply the selected service level response or responses, or the output causes the computer platform to apply the selected service level response or responses.

12. A method, comprising:
receiving an alert (5a) indicative of an intrusion to an operating system, the operating system comprising a plurality of operating system services, and in response to the alert (5a):
identifying, based on the alert (5a), an operating system service of the plurality of operating system services being related to the alert (5a);
selecting, for the identified operating system service a candidate service level response to the intrusion indicated by the alert (5a); and
providing an output depending on the candidate service level response selected
in respect of the identified operating system service; wherein said output is an indication to a computer platform running the operating system to apply the selected service level response or responses, or the output causes the computer platform to apply the selected service level response or responses.

13. The method of claim 12 wherein the selected candidate service level response is to at
least predominantly affect the service in respect of which it was selected over the other
services of the operating system.

14. The method of claim 12 wherein selecting the candidate service level response for the operating system service related to the alert is dependent on a service specific risk indicator indicative of a risk level of a malicious behavior associated with the alert (5a) in relation to the said service and a response cost indicator indicative of a cost of applying the candidate service level response.

15. The method of claim 12 comprising:
selecting a plurality of candidate service level responses in respect of an operating system service related to the alert (5a), or a candidate service level response or a plurality of candidate service level responses in respect of each of a plurality of operating system services related to the alert (5a); and
providing an output depending on the selected candidate service level responses or on a subset of the selected candidate service level responses.

## Patentansprüche

1. Datenverarbeitungsvorrichtung (1), die Folgendes umfasst:
einen Speicher (4), der eine Kandidatendienstebenenantwort (4a) auf ein Eindringen in ein Betriebssystem speichert, das mehrere Betriebssystemdienste aufweist;
einen Verarbeitungsschaltkreis (2), der mit dem Speicher (4) gekoppelt ist; und
einen Ausgang (3), der mit dem Verarbeitungsschaltkreis (2) gekoppelt ist,
wobei der Verarbeitungsschaltkreis (2) zu Folgendem dient:
Empfangen einer Warnung (5a), die das Eindringen anzeigt;
Identifizieren, basierend auf der Warnung (5a), eines Betriebssystemdienstes der mehreren Betriebssystemdienste, der sich auf das Eindringen bezieht, das durch die Warnung (5a) angezeigt wird;
Auswählen, aus dem Speicher (4) für den identifizierten Betriebssystemdienst, der Kandidatendienstebenenantwort (4a) auf das Eindringen; und
Bereitstellen eines Signals an den Ausgang (3) in Abhängigkeit von der Kandidatendienstebenenantwort (4a), die hinsichtlich des Betriebssystemdienstes ausgewählt wird;
wobei die Ausgabe eine Anzeige für eine Computerplattform ist, auf der das Betriebssystem ausgeführt wird, um die ausgewählte(n) Dienstebenenantwort oderantworten anzuwenden, oder die Ausgabe die Computerplattform veranlasst, die ausgewählte(n) Dienstebenenantwort oder -antworten anzuwenden.

2. Datenverarbeitungsvorrichtung (1) nach Anspruch 1, wobei die ausgewählte Kandidatendienstebenenantwort (4a) dazu dient, den Betriebssystemdienst, hinsichtlich derer sie gegenüber den anderen Betriebssystemdiensten des Betriebssystems ausgewählt wird, wenigstens überwiegend zu beeinflussen.

3. Datenverarbeitungsvorrichtung (1) nach Anspruch 1, wobei der Betriebssystemdienst, der sich auf die Warnung (5a) bezieht, ein Betriebssystemdienst ist, der durch eine böswillige Verhaltensweise beeinflusst ist, das der Warnung (5a) zugeordnet ist.

4. Datenverarbeitungsvorrichtung (1) nach Anspruch 1, wobei der Verarbeitungsschaltkreis (2) dazu dient, aus dem Speicher (4) für den Betriebssystemdienst, der sich auf die Warnung (5a) bezieht, die Kandidatendienstebenenantwort in Abhängigkeit von einer betriebssystemdienstspezifischen Risikoanzeige, die ein Risikoniveau einer böswilligen Verhaltensweise anzeigt, das der Warnung (5a) in Bezug auf den Betriebssystemdienst zugeordnet ist, und einer Antwortkostenanzeige auszuwählen, die Kosten für das Anwenden der Kandidatendienstebenenantwort anzeigt.

5. Datenverarbeitungsvorrichtung (1) nach Anspruch 4, wobei die dienstspezifische Risikoanzeige von betriebssystemdienstspezifischen Kosten einer böswilligen Verhaltensweise, das der Warnung (5a) in Bezug auf diesen Betriebssystemdienst zugeordnet ist und keinem, einem oder beidem von Folgendem abhängig ist: einer Vertrauensanzeige, die der Warnung (5a) zugeordnet ist, wobei die Vertrauensanzeige eine Zuversicht anzeigt, dass die Warnung eine wirklich positive Warnung ist; und eine Risikorichtlinie.

6. Datenverarbeitungsvorrichtung (1) nach Anspruch 4, wobei der Verarbeitungsschaltkreis (2) dazu dient, aus dem Speicher (4) für den Betriebssystemdienst, der sich auf die Warnung (5a) bezieht, die Kandidatendienstebenenantwort in Abhängigkeit von einer Wirksamkeitsanzeige auszuwählen, die eine Wirksamkeit der Kandidatendienstebenenantwort beim Abschwächen der böswilligen Verhaltensweise oder eines Eindringens (5a), das mit der Warnung verknüpft ist, anzeigt.

7. Datenverarbeitungsvorrichtung (1) nach Anspruch 1, wobei die Kandidatendienstebenenantwort eine von mehreren Kandidatendienstebenenantworten auf das Eindringen ist, das durch den Speicher (4) gespeichert wird, und wobei der Verarbeitungsschaltkreis (2), in Abhängigkeit einer Warnung (5a), die das Eindringen anzeigt, zu Folgendem dient:
Auswählen, aus dem Speicher (4), mehrerer Kandidatendienstebenenantworten hinsichtlich eines Betriebssystemdienstes, der sich auf die Warnung (5a) bezieht, oder einer Kandidatendienstebenenantwort oder mehrerer Kandidatendienstebenenantworten hinsichtlich jedes von mehreren Betriebssystemdiensten, der sich auf die Warnung (5a) bezieht; und
Bereitstellen eines Signals an den Ausgang (3) in Abhängigkeit von den ausgewählten Kandidatendienstebenenantworten oder von einer Untergruppe der ausgewählten Kandidatendienstebenenantworten.

8. Datenverarbeitungsvorrichtung (1) nach Anspruch 7, wobei der Verarbeitungsschaltkreis (2) dazu dient, eine Dienstebenenantwort oder mehrere Dienstebenenantworten aus den ausgewählten Kandidatendienstebenenantworten in Abhängigkeit von einem oder beiden von jeweiligen Antwortkostenanzeigen und jeweiligen Wirksamkeitsanzeigen, die den jeweiligen Kandidatendienstebenenantworten zugeordnet sind, auszuwählen, wobei die jeweiligen Antwortkostenanzeigen Kosten für das Anwenden der jeweiligen Antworten anzeigen, wobei die jeweiligen Wirksamkeitsanzeigen die Wirksamkeiten der jeweiligen Antworten beim Abschwächen einer böswilligen Verhaltensweise oder Eindringens anzeigen, das der Warnung (5a) zugeordnet ist, und dazu, das Signal an den Ausgang (3) in Abhängigkeit von der oder den ausgewählten Dienstebenenantwort(en) bereitzustellen.

9. Datenverarbeitungsvorrichtung (1) nach Anspruch 1, wobei die Warnung (5a) mehreren böswilligen Verhaltensweisen zugeordnet ist und für jedes der mehreren böswilligen Verhaltensweisen der Verarbeitungsschaltkreis (3) zu Folgendem dient:
Auswählen, aus dem Speicher (4), für einen Betriebssystemdienst der mehreren Betriebssystemdienste, der durch die böswillige Verhaltensweise beeinflusst ist, oder für jeden von ausgewählten mehreren von Betriebssystemdiensten der mehreren Betriebssystemdienste, der durch die böswillige Verhaltensweise beeinflusst ist, einer Kandidatendienstebenenantwort auf das Eindringen oder mehrere Kandidatendienstebenenantworten auf das Eindringen.

10. Datenverarbeitungsvorrichtung (1) nach Anspruch 9, wobei der Verarbeitungsschaltkreis (2) zu Folgendem dient:
Bereitstellen eines Signals an den Ausgang (3) in Abhängigkeit von der Kandidatendienstebenenantwort oder -antworten, die hinsichtlich einer böswilligen Verhaltensweise der mehreren böswilligen Verhaltensweisen oder hinsichtlich der mehreren böswilligen Verhaltensweisen ausgewählt sind, oder von einer Untergruppe der ausgewählten Kandidatendienstebenenantworten hinsichtlich einer böswilligen Verhaltensweise der mehreren böswilligen Verhaltensweisen oder hinsichtlich der mehreren böswilligen Verhaltensweisen.

11. Nichtflüchtiges maschinenlesbares Speichermedium (6), das mit Anweisungen codiert ist, die durch einen Prozessor durchführbar sind, wobei das maschinenlesbare Speichermedium Folgendes umfasst:
Anweisungen, um in Abhängigkeit von einer Warnung (5a), die ein Eindringen in ein Betriebssystem anzeigt, das mehrere Betriebssystemdienste umfasst, für einen Betriebssystemdienst der mehreren Betriebssystemdienste, der sich auf die Warnung (5a) bezieht, eine Kandidatendienstebenenantwort auf ein Eindringen zu bestimmen; und
Anweisungen, um eine Ausgabe (3) in Abhängigkeit von der Kandidatendienstebenenantwort bereitzustellen, die hinsichtlich des Betriebssystemdienstes bestimmt wird; wobei die Ausgabe eine Anzeige für eine Computerplattform ist, auf der das Betriebssystem ausgeführt wird, um die ausgewählte(n) Dienstebenenantwort oder -antworten anzuwenden, oder die Ausgabe die Computerplattform veranlasst, die ausgewählte(n) Dienstebenenantwort oder -antworten anzuwenden.

12. Verfahren, das Folgendes umfasst:
Empfangen einer Warnung (5a), die ein Eindringen in ein Betriebssystem anzeigt, wobei das Betriebssystem mehrere Betriebssystemdienste umfasst, und als Reaktion auf die Warnung (5a):
Identifizieren, basierend auf der Warnung (5a), eines Betriebssystemdienstes der mehreren Betriebssystemdienste, der sich auf die Warnung (5a) bezieht;
Auswählen, für den identifizierten Betriebssystemdienst, einer Kandidatendienstebenenantwort auf das Eindringen, das durch die Warnung (5a) angezeigt wird; und
Bereitstellen einer Ausgabe in Abhängigkeit von der Kandidatendienstebenenantwort, die hinsichtlich des identifizierten Betriebssystemdienstes ausgewählt wird; wobei die Ausgabe eine Anzeige für eine Computerplattform ist, auf der das Betriebssystem ausgeführt wird, um die ausgewählte(n) Dienstebenenantwort oder -antworten anzuwenden, oder die Ausgabe die Computerplattform veranlasst, die ausgewählte(n) Dienstebenenantwort oder -antworten anzuwenden.

13. Verfahren nach Anspruch 12, wobei die ausgewählte Kandidatendienstebenenantwort dazu dient, den Dienst, hinsichtlich derer sie gegenüber den anderen Diensten des Betriebssystems ausgewählt wird, wenigstens überwiegend zu beeinflussen.

14. Verfahren nach Anspruch 12, wobei das Auswählen der Kandidatendienstebenenantwort für den Betriebssystemdienst, der sich auf die Warnung bezieht, von einer dienstspezifischen Risikoanzeige, die ein Risikoniveau einer böswilligen Verhaltensweise anzeigt, das der Warnung (5a) in Bezug auf den Dienst zugeordnet ist, und einer Antwortkostenanzeige abhängt, die Kosten des Anwendens der Kandidatendienstebenenantwort anzeigt.

15. Verfahren nach Anspruch 12, das Folgendes umfasst:
Auswählen mehrerer Kandidatendienstebenenantworten hinsichtlich eines Betriebssystemdienstes, der sich auf die Warnung (5a) bezieht, oder einer Kandidatendienstebenenantwort oder mehrerer Kandidatendienstebenenantworten hinsichtlich jedes von mehreren Betriebssystemdiensten, der sich auf die Warnung (5a) bezieht; und
Bereitstellen einer Ausgabe in Abhängigkeit von den ausgewählten Kandidatendienstebenenantworten oder von einer Untergruppe der ausgewählten Kandidatendienstebenenantworten.

## Revendications

1. Appareil de traitement de données (1) comprenant :
une mémoire (4) stockant une réponse de niveau de service candidate (4a) à une intrusion dans un système d'exploitation ayant une pluralité de services de système d'exploitation ;
des circuits de traitement (2) couplés à la mémoire (4) ; et
une sortie (3) couplée aux circuits de traitement (2),
les circuits de traitement (2) devant :
recevoir une alerte (5a) indiquant l'intrusion ;
identifier, sur la base de l'alerte (5a), un service de système d'exploitation de la pluralité de services de système d'exploitation qui est lié à l'intrusion indiquée par l'alerte (5a) ;
sélectionner à partir de la mémoire (4), pour le service de système d'exploitation identifié la réponse de niveau de service candidate (4a) à l'intrusion ; et
fournir un signal à la sortie (3) en fonction de la réponse de niveau de service candidate (4a) sélectionnée par rapport audit service de système d'exploitation ;
ladite sortie étant une indication à une plateforme informatique exécutant le système d'exploitation pour appliquer la ou les réponses de niveau de service sélectionnées, ou la sortie amenant la plateforme informatique à appliquer la ou les réponses de niveau de service sélectionnées.

2. Appareil de traitement de données (1) selon la revendication 1, la réponse de niveau de service candidate sélectionnée (4a) devant affecter au moins principalement le service de système d'exploitation pour lequel elle a été sélectionnée par rapport aux autres services de système d'exploitation du système d'exploitation.

3. Appareil de traitement de données (1) selon la revendication 1, ledit service de système d'exploitation lié à l'alerte (5a) étant un service de système d'exploitation affecté par un comportement malveillant associé à l'alerte (5a).

4. Appareil de traitement de données (1) selon la revendication 1, les circuits de traitement (2) devant sélectionner à partir de la mémoire (4), pour ledit service de système d'exploitation lié à l'alerte (5a), la réponse de niveau de service candidate en fonction d'un indicateur de risque spécifique au service de système d'exploitation indiquant un niveau de risque d'un comportement malveillant associé à l'alerte (5a) par rapport audit service de système d'exploitation et un indicateur de coût de réponse indiquant un coût d'application de la réponse de niveau de service candidate.

5. Appareil de traitement de données (1) selon la revendication 4, l'indicateur de risque spécifique au service étant dépendant d'un coût spécifique au service de système d'exploitation d'un comportement malveillant associé à l'alerte (5a) par rapport à ce service de système d'exploitation et aucun, un ou les deux des éléments suivants : un indicateur de confiance associé à l'alerte (5a), l'indicateur de confiance indiquant une confiance dans le fait que l'alerte est une véritable alerte positive ; et une politique de risque.

6. Appareil de traitement de données (1) selon la revendication 4, les circuits de traitement (2) devant sélectionner à partir de la mémoire (4), pour ledit service de système d'exploitation lié à l'alerte (5a), ladite réponse de niveau de service candidate en fonction d'un indicateur d'efficacité indiquant une efficacité de la réponse de niveau de service candidate dans l'atténuation du comportement malveillant ou d'une intrusion associé à l'alerte (5a).

7. Appareil de traitement de données (1) selon la revendication 1, la réponse de niveau de service candidate étant l'une d'une pluralité de réponses de niveau de service candidates à l'intrusion stockées par la mémoire (4), et les circuits de traitement (2) devant, en fonction d'une alerte (5a) indiquant l'intrusion :
sélectionner à partir de la mémoire (4) une pluralité de réponses de niveau de service candidates par rapport à un service de système d'exploitation lié à l'alerte (5a), ou une réponse de niveau de service candidate ou une pluralité de réponses de niveau de service candidates par rapport à chaque service de système d'exploitation d'une pluralité de services de système d'exploitation liés à l'alerte (5a) ; et
fournir un signal à la sortie (3) en fonction des réponses de niveau de service candidates sélectionnées ou d'un sous-ensemble des réponses de niveau de service candidates sélectionnées.

8. Appareil de traitement de données (1) selon la revendication 7, les circuits de traitement (2) devant sélectionner une réponse de niveau de service, ou une pluralité de réponses de niveau de service, à partir des réponses de niveau de service candidates sélectionnées en fonction des indicateurs de coût de réponse respectifs et/ou des indicateurs d'efficacité respectifs associés aux réponses de niveau de service candidates respectives, les indicateurs de coût de réponse respectifs indiquant des coûts d'application des réponses respectives, les indicateurs d'efficacité respectifs indiquant l'efficacité des réponses respectives dans l'atténuation d'un comportement malveillant ou d'une intrusion associé à l'alerte (5a), et fournir ledit signal à la sortie (3) en fonction de la ou des réponses de niveau de service sélectionnées.

9. Appareil de traitement de données (1) selon la revendication 1, l'alerte (5a) étant associée à une pluralité de comportements malveillants et, pour chacun de ladite pluralité de comportements malveillants, les circuits de traitement (3) devant :
sélectionner à partir de la mémoire (4), pour un service de système d'exploitation de la pluralité de services de système d'exploitation affectés par le comportement malveillant ou pour chaque service de système d'exploitation d'une pluralité de services de système d'exploitation sélectionnés de la pluralité de services de système d'exploitation affectés par le comportement malveillant, une réponse de niveau de service candidate à l'intrusion ou une pluralité de réponses de niveau de service candidates à l'intrusion.

10. Appareil de traitement de données (1) selon la revendication 9, les circuits de traitement (2) devant :
fournir un signal à la sortie (3) en fonction de la ou des réponses de niveau de service candidates sélectionnées par rapport à un comportement malveillant de ladite pluralité de comportements malveillants ou par rapport à ladite pluralité de comportements malveillants ou d'un sous-ensemble desdites réponses de niveau de service candidates sélectionnées par rapport à un comportement malveillant de ladite pluralité de comportements malveillants ou par rapport à ladite pluralité de comportements malveillants.

11. Support de stockage non transitoire lisible par machine (6) codé avec des instructions exécutables par un processeur, le support de stockage lisible par machine comprenant :
des instructions à déterminer en fonction d'une alerte (5a) indiquant une intrusion dans un système d'exploitation comprenant une pluralité de services de système d'exploitation, pour un service de système d'exploitation de ladite pluralité de services de système d'exploitation liés à l'alerte (5a), une réponse de niveau de service candidate à une intrusion ; et
des instructions pour fournir une sortie (3) en fonction de la réponse de niveau de service candidate déterminée par rapport audit service de système d'exploitation ; ladite sortie étant une indication à une plateforme informatique exécutant le système d'exploitation pour appliquer la ou les réponses de niveau de service sélectionnées, ou la sortie amenant la plateforme informatique à appliquer la ou les réponses de niveau de service sélectionnées.

12. Procédé, comprenant :
la réception d'une alerte (5a) indiquant une intrusion dans un système d'exploitation, le système d'exploitation comprenant une pluralité de services de système d'exploitation, et en réponse à l'alerte (5a) :
l'identification, sur la base de l'alerte (5a), d'un service de système d'exploitation de la pluralité de services de système d'exploitation liés à l'alerte (5a) ;
la sélection, pour le service de système d'exploitation identifié, d'une réponse de niveau de service candidate à l'intrusion indiquée par l'alerte (5a) ; et
la fourniture d'une sortie en fonction de la réponse de niveau de service candidate sélectionnée par rapport au service de système d'exploitation identifié ; ladite sortie étant une indication à une plateforme informatique exécutant le système d'exploitation pour appliquer la ou les réponses de niveau de service sélectionnées, ou la sortie amenant la plateforme informatique à appliquer la ou les réponses de niveau de service sélectionnées.

13. Procédé selon la revendication 12, la réponse de niveau de service candidate sélectionnée devant affecter au moins principalement le service pour lequel elle a été sélectionnée par rapport aux autres services du système d'exploitation.

14. Procédé selon la revendication 12, la sélection de la réponse de niveau de service candidate pour le service de système d'exploitation lié à l'alerte étant dépendante d'un indicateur de risque spécifique au service indiquant un niveau de risque d'un comportement malveillant associé à l'alerte (5a) par rapport audit service et un indicateur de coût de réponse indiquant un coût d'application de la réponse de niveau de service candidate.

15. Procédé selon la revendication 12, comprenant :
la sélection d'une pluralité de réponses de niveau de service candidates par rapport à un service de système d'exploitation lié à l'alerte (5a), ou d'une réponse de niveau de service candidate ou d'une pluralité de réponses de niveau de service candidates par rapport à chaque service de système d'exploitation d'une pluralité de services de système d'exploitation liés à l'alerte (5a) ; et
la fourniture d'une sortie en fonction des réponses de niveau de service candidates sélectionnées ou d'un sous-ensemble des réponses de niveau de service candidates sélectionnées.
